# EUROPÄISCHE PATENTSCHRIFT

(11) **EP 3 825 068 B1**
(45) Veröffentlichungstag und Bekanntmachung des Hinweises auf die Patenterteilung: **01.01.2025**
(21) Anmeldenummer: 19210898.3
(22) Anmeldetag: 22.11.2019
(51) Int. Cl.: B25F 5/00

(54) **VERFAHREN ZUM ANPASSEN EINER VORRICHTUNG AN EIN MOTORANGETRIEBENES WERKZEUG, VERFAHREN ZUM TYPABHÄNGIGEN BETREIBEN EINER VORRICHTUNG, VORRICHTUNG ZUM ANPASSEN AN EIN MOTORANGETRIEBENES WERKZEUG UND SYSTEM**
METHOD FOR ADAPTING A DEVICE TO A MOTOR-DRIVEN TOOL, METHOD FOR THE TYPE-DEPENDENT OPERATION OF A DEVICE, DEVICE FOR ADAPTING TO A MOTOR DRIVEN TOOL AND SYSTEM
PROCÉDÉ D'AJUSTEMENT D'UN DISPOSITIF À UN OUTIL MOTORISÉ, PROCÉDÉ DE FONCTIONNEMENT DÉPENDANT DU TYPE D'UN DISPOSITIF, DISPOSITIF D'AJUSTEMENT À UN OUTIL MOTORISÉ ET SYSTÈME

(43) Veröffentlichungstag der Anmeldung: 26.05.2021
(73) Patentinhaber: Andreas Stihl AG & Co. KG, 71336 Waiblingen (DE)
(72) Erfinder: Kaiser, Michael, 71336 Waiblingen (DE); Vaas, André, 73489 Jagstzell (DE); Gurr, Kay-Steffen, 74078 Heilbronn (DE)
(74) Vertreter: Patentanwälte Ruff, Wilhelm, Beier, Dauster & Partner mbB

(56) Entgegenhaltungen:
- EP-A1- 2 521 206
- DE-A1- 102017 204 150
- US-A1- 2014 025 834
- US-B2- 9 878 432

## Beschreibung

### ANWENDUNGSGEBIET UND STAND DER TECHNIK

Die Erfindung bezieht sich auf ein Verfahren, gemäß dem Oberbegriff des Anspruchs 1, zum Anpassen einer Vorrichtung an ein motorangetriebenes Werkzeug aus einer Menge von verschiedenen Typen von motorangetriebenen Werkzeugen, ein Verfahren zum typabhängigen Betreiben einer Vorrichtung, wobei die Vorrichtung an einem motorangetriebenen Werkzeug aus einer Menge von verschiedenen Typen von motorangetriebenen Werkzeugen angeordnet ist, wobei das Verfahren ein solches Verfahren zum Anpassen der Vorrichtung an das Werkzeug aufweist, und ein System, gemäß dem Oberbegriff des Anspruchs 13, aufweisend eine Vorrichtung zum Anpassen an ein motorangetriebenes Werkzeug aus einer Menge von verschiedenen Typen von motorangetriebenen Werkzeugen.

Die US 9,878,432 B2 offenbart ein Verfahren gemäß dem Oberbegriff des Anspruchs 1 und ein System gemäß dem Oberbegriff des Anspruchs 13. Das Dokument zeigt ein handgehaltenes Elektrowerkzeug aufweisend einen in einem Elektrowerkzeugkörper gehaltenen elektrischen Motor und einen universalen Kontroller in dem Elektrowerkzeugkörper in Kommunikation mit dem elektrischen Motor. Der universale Kontroller ist in Kommunikation mit einer elektronischen Komponente, die einen Werkzeugtypidentifizierer im Elektrowerkzeugkörper definiert. Auch weist das handgehaltene Elektrowerkzeug einen lösbar am Werkzeugmaschinenkörper befestigbaren Akkupack auf, wobei der Akkupack einen bordeigenen elektronischen Identifizierer aufweist. Der universale Kontroller weist eine Mehrzahl verschiedener Betriebskontrollmodi für eine Mehrzahl verschiedener Werkzeugtypen und eine Mehrzahl verschiedener Akkupacks mit verschiedenen Akkucharakteristiken auf. Der Kontroller kann basierend auf dem Werkzeugtypidentifizierer und dem Akkupackidentifizierer einen geeigneten Kontrollmodus automatisch selektieren.

Die EP 2 521 206 A1 offenbart einen portablen Apparat zum Antreiben und Kontrollieren von elektrischem Equipment, insbesondere für einen agrikulturellen Nutzen, das ein Gerät, das aus einem elektrischen Motor und einem Werkzeug besteht, gewählt aus einer Mehrzahl von Geräten, und eine Batterie zum Versorgen des elektrischen Motors mit Leistung umfasst. Seine Besonderheit besteht darin, dass es ein Kommunikationssystem umfasst, das die unidirektionale Übertragung von Informationen von dem Gerät zu der Batterie ermöglicht, die aus einem Mikrocontroller, der mit einem Identifikationsmittel versehen ist und an das Gerät gekoppelt ist, und einem elektronischen Kontrollsystem gekoppelt mit der Batterie für die Identifikation des Geräts besteht.

### AUFGABE UND LÖSUNG

Der Erfindung liegt als Aufgabe die Bereitstellung eines Verfahrens zum Anpassen einer Vorrichtung an ein motorangetriebenes Werkzeug aus einer Menge von verschiedenen Typen von motorangetriebenen Werkzeugen zugrunde, insbesondere wobei das Verfahren verbesserte Eigenschaften aufweist. Des Weiteren liegt der Erfindung als Aufgabe die Bereitstellung eines Verfahrens zum typabhängigen Betreiben einer Vorrichtung, wobei die Vorrichtung an einem motorangetriebenen Werkzeug aus einer Menge von verschiedenen Typen von motorangetriebenen Werkzeugen angeordnet ist, wobei das Verfahren ein solches Verfahren zum Anpassen der Vorrichtung an das Werkzeug aufweist, und eines Systems aufweisend eine Vorrichtung zum Anpassen an ein motorangetriebenes Werkzeug aus einer Menge von verschiedenen Typen von motorangetriebenen Werkzeugen zugrunde.

Die Erfindung löst diese Aufgabe durch die Bereitstellung eines Verfahrens mit den Merkmalen des Anspruchs 1. Des Weiteren wird die der Erfindung zugrundeliegende Aufgabe durch ein Verfahren mit den Merkmalen des Anspruchs 12 und ein System mit den Merkmalen des Anspruchs 13 gelöst. Vorteilhafte Weiterbildungen und/oder Ausgestaltungen der Erfindung sind in den abhängigen Ansprüchen beschrieben.

Das erfindungsgemäße, insbesondere automatische, Verfahren zum, insbesondere automatischen und/oder softwareseitigen, Anpassen einer Vorrichtung an ein motorangetriebenes Werkzeug aus einer Menge von verschiedenen Typen von motorangetriebenen Werkzeugen, wobei die Vorrichtung an, insbesondere in, dem Werkzeug angeordnet ist bzw. mit diesem mechanisch verbunden ist, weist die Schritte auf: a) Erfassen, insbesondere automatisches Erfassen, eines Identifikators, insbesondere eines Werts des Identifikators, von dem Werkzeug mittels der Vorrichtung. b) Übertragen, insbesondere automatisches Übertragen, einer typspezifischen Konfigurationsinformation von einer Datenbank, insbesondere einer Cloud, wobei die Datenbank von dem Werkzeug und der Vorrichtung verschieden ist, zu der Vorrichtung basierend auf dem erfassten Identifikator derart, dass die Vorrichtung zum typspezifischen Verarbeiten von Betriebsdaten, insbesondere von Werten der Betriebsdaten, von dem Werkzeug ausgebildet bzw. konfiguriert ist.

Das Verfahren ermöglicht, dass die Vorrichtung bei werksseitiger Auslieferung nicht an das Werkzeug angepasst sein braucht. In anderen Worten: das Verfahren ermöglicht, dass die Vorrichtung nicht aufweisend eine typspezifische Konfigurationsinformation aus einer Menge von verschiedenen typspezifischen Konfigurationsinformationen und somit in verschiedenen Typen bzw. Varianten werksseitig ausgeliefert werden braucht. Anders formuliert: das Verfahren ermöglicht, dass die Vorrichtung in nur einer einzigen Variante bzw. einheitlich werksseitig ausgeliefert werden kann. Dies ermöglicht, dass ein Benutzer die Vorrichtung beschaffen kann ohne den Typ des Werkzeugs beachten zu brauchen.

Zusätzlich oder alternativ ermöglicht das Verfahren das Anpassen ohne ein Dazutun, insbesondere von Informationen, des Benutzers.

Weiter zusätzlich oder alternativ ermöglicht das Verfahren, insbesondere das Übertragen der typspezifischen Konfigurationsinformation, bzw. die Ausbildung der Vorrichtung zum typspezifischen Verarbeiten eine typspezifische Funktionalität der Vorrichtung. Dies, insbesondere die Ausbildung zum typspezifischen Verarbeiten, ermöglicht, dass die Vorrichtung die Betriebsdaten von dem Werkzeug nicht unverarbeitet weiterleiten braucht. In anderen Worten: dies ermöglicht, ein Volumen zu übertragender Daten von der Vorrichtung gering zu halten.

Insbesondere kann die Vorrichtung bei werksseitiger Auslieferung eine typunspezifische Konfigurationsinformation bzw. Basiskonfigurationsinformation bzw. Grundfunktionalität derart aufweisen, dass die Vorrichtung zum Erfassen des Identifikators ausgebildet sein kann. Zusätzlich oder alternativ kann die Anordnung an, insbesondere in, dem Werkzeug das Erfassen des Identifikators ermöglichen. Weiter zusätzlich oder alternativ kann der Identifikator eine Information zum eindeutigen Identifizieren des Werkzeugs oder des Typs des Werkzeugs aufweisen.

Der Schritt b) kann zeitlich nach dem Schritt a) ausgeführt werden.

Das Übertragen der typspezifischen Konfigurationsinformation kann kabellos sein. Zusätzlich oder alternativ kann der Schritt b) aufweisen: Übertragen des erfassten Identifikators oder einer mittels der Vorrichtung basierend auf dem erfassten Identifikator ermittelten bzw. ausgewählten Identifikatorinformation von der Vorrichtung zu der Datenbank. Weiter zusätzlich oder alternativ kann der Schritt b) aufweisen: Ermitteln bzw. Auswählen der typspezifischen Konfigurationsinformation, insbesondere aus einer Menge von verschiedenen typspezifischen Konfigurationsinformationen, basierend auf dem übertragenen Identifikator oder der übertragenen Identifikatorinformation mittels der Datenbank. Weiter zusätzlich oder alternativ kann der Schritt b) aufweisen: Übertragen der ermittelten bzw. ausgewählten typspezifischen Konfigurationsinformation von der Datenbank zu der Vorrichtung. Weiter zusätzlich oder alternativ kann der Schritt b) aufweisen: Implementieren der typspezifischen Konfigurationsinformation mittels bzw. auf der Vorrichtung. Weiter zusätzlich oder alternativ kann dem Identifikator oder der Identifikatorinformation die typspezifische Konfigurationsinformation zugeordnet sein, insbesondere in der Datenbank. Weiter zusätzlich oder alternativ kann die typspezifische Konfigurationsinformation als typspezifische Konfigurationsdatei bezeichnet werden. Weiter zusätzlich oder alternativ kann die typspezifische Konfigurationsinformation in passender Version sein. Weiter zusätzlich oder alternativ kann typspezifisch für die verschiedenen Typen von Werkzeugen verschieden bedeuten.

Das Werkzeug kann ein handgeführtes, insbesondere handgetragenes oder bodengeführtes, Werkzeug sein. Insbesondere handgeführtes, insbesondere handgetragenes, Werkzeug kann bedeuten, dass das Werkzeug eine Masse von maximal 50 Kilogramm (kg), insbesondere von maximal 20 kg, insbesondere von maximal 10 kg, aufweisen kann. Zusätzlich oder alternativ kann das Werkzeug ein Garten- und/oder Forstbearbeitungswerkzeug oder ein Bodenbearbeitungswerkzeug sein.

Die Vorrichtung kann von dem Werkzeug verschieden sein. Zusätzlich oder alternativ kann der Identifikator von den Betriebsdaten verschieden sein. Weiter zusätzlich oder alternativ kann die Konfigurationsinformation von dem Identifikator und/oder der Identifikatorinformation, soweit vorhanden, und/oder den Betriebsdaten verschieden sein.

Die Vorrichtung kann, insbesondere mechanisch, mit dem Werkzeug gekoppelt bzw. an, insbesondere in, dem Werkzeug angebracht bzw. befestigt sein. Insbesondere kann die Vorrichtung mit dem Werkzeug, insbesondere lösbar, verbunden sein, insbesondere durch eine stoffschlüssige Verbindung, wie eine Verklebung, eine kraftschlüssige Verbindung, wie eine Rast- bzw. Schnappverbindung, und/oder ein formschlüssige Verbindung, wie eine Verschraubung. Zusätzlich oder alternativ kann die Vorrichtung in direktem bzw. unmittelbarem Kontakt mit dem Werkzeug sein.

Die Vorrichtung kann ein Teil des Werkzeugs sein.

In einer Weiterbildung der Erfindung ist die Vorrichtung getrennt von dem Werkzeug ausgebildet bzw. konfiguriert. Dies ermöglicht eine Nachrüstung der Vorrichtung an dem Werkzeug, insbesondere zeitlich nach einer werkseitigen Auslieferung des Werkzeugs. Insbesondere kann die Vorrichtung als Gerät bezeichnet werden. Zusätzlich oder alternativ kann die Einrichtung ein Teil eines Akkumulators, insbesondere eines Akkumulatorpacks, für das Werkzeug, insbesondere zur Antriebsstromversorgung des Werkzeugs, insbesondere in Form eines Akkuwerkzeugs, sein.

In einer Weiterbildung der Erfindung weist der Identifikator eine Typnummer und/oder eine Seriennummer auf. Insbesondere ist der Identifikator eine Typnummer oder eine Seriennummer.

Das Erfassen des Identifikators kann kabellos sein. Insbesondere kann die Vorrichtung das Werkzeug nach dem Identifikator fragen.

In einer Weiterbildung der Erfindung ist die Vorrichtung mit dem Werkzeug mittels eines Kabels zum Erfassen des Identifikators, insbesondere und der Betriebsdaten, verbunden. Der Schritt a) weist auf: Erfassen des Identifikators mittels des Kabels. Dies ermöglicht ein einfaches Erfassen des Identifikators, insbesondere und der Betriebsdaten.

Das Werkzeug kann ein Motorsteuergerät aufweisen. Das Kabel kann mit dem Motorsteuergerät direkt bzw. unmittelbar verbunden sein.

In einer Ausgestaltung der Erfindung ist das Werkzeug ein Akkuwerkzeug, weist eine, insbesondere typunspezifische, Akkuschnittstelle auf und ist mittels der Akkuschnittstelle mit einem, insbesondere typunspezifischen, Akkumulator, insbesondere zur Antriebsstromversorgung, insbesondere eines Antriebsmotors des Werkzeugs, verbunden. Zwischen dem Akkuwerkzeug und dem Akkumulator werden über die Akku-Schnittstelle, insbesondere eine Kommunikationsleitung der Akku-Schnittstelle, der Identifikator, insbesondere und die Betriebsdaten, übertragen. Das Kabel ist mit der Akku-Schnittstelle oder einem Bus des Werkzeugs für die Akku-Schnittstelle verbunden. Dies ermöglicht ein einfaches Erfassen des Identifikators, insbesondere und der Betriebsdaten, insbesondere bei Ausbildung der Vorrichtung getrennt von dem Werkzeug bzw. bei Nachrüstung der Vorrichtung. Insbesondere kann die Vorrichtung von dem Akkumulator verschieden sein.

In einer Weiterbildung der Erfindung sind die Betriebsdaten von dem Werkzeug in einem typspezifischen Datenformat. Das typspezifische Verarbeiten weist ein Verstehen bzw. ein Interpretieren der Betriebsdaten in dem typspezifischen Datenformat auf.

Zusätzlich oder alternativ weist das typspezifische Verarbeiten ein typspezifisches Auswerten der Betriebsdaten auf.

Weiter zusätzlich oder alternativ weist das typspezifische Verarbeiten ein typspezifisches Speichern der Betriebsdaten auf.

Das typspezifische Datenformat ermöglicht, ein Volumen der Betriebsdaten des Werkzeugs gering zu halten. Zusätzlich oder alternativ ermöglicht das Verstehen der Betriebsdaten in dem typspezifischen Datenformat ein, insbesondere das typspezifische, Auswerten und/oder ein, insbesondere das typspezifische, Speichern, der Betriebsdaten mittels der Vorrichtung. Weiter zusätzlich oder alternativ ermöglicht das typspezifische Auswerten der Betriebsdaten die typspezifische Funktionalität der Vorrichtung, insbesondere, dass die Vorrichtung die Betriebsdaten von dem Werkzeug nicht unausgewertet weiterleiten braucht, und/oder ein Speichern für den Benutzer relevanter Betriebsdaten und/oder ein Nicht-Speichern von für den Benutzer irrelevanten Betriebsdaten mittels der Vorrichtung. Weiter zusätzlich oder alternativ ermöglicht das typspezifische Speichern ein Volumen zu speichernder Daten, insbesondere Betriebsdaten, gering zu halten.

Insbesondere kann der Identifikator in einem typunspezifischen Datenformat sein. Zusätzlich oder alternativ kann die Vorrichtung, insbesondere bei werksseitiger Auslieferung, zum Verstehen des Identifikators ausgebildet sein. Insbesondere kann der Schritt a) aufweisen: Verstehen des Identifikators.

In einer Ausgestaltung der Erfindung weist die Konfigurationsinformation zum Verstehen eine Information zum Finden und/oder zum Erkennen der Betriebsdaten, insbesondere in Schnittstellendaten der Akku-Schnittstelle, von dem Werkzeug, insbesondere eine Information über eine Datenadresse, einen Datennamen, einen Datentyp, einen Datenwert und/oder eine Datengröße, auf.

Zusätzlich oder alternativ weist die Konfigurationsinformation zum typspezifischen Auswerten eine Information über mindestens einen typspezifischen Betriebsdatenwert, insbesondere mindestens einen typspezifischen Betriebsdatengrenzwert, insbesondere zum Erstellen einer Betriebsdatenstatistik und/oder zum Erkennen und/oder zum Speichern eines Fehlers des Werkzeugs und/oder zum, insbesondere benutzerwahrnehmbaren, Ausgeben und/oder zum Senden einer Auswerteinformation ausgewertet aus den Betriebsdaten, auf.

Weiter zusätzlich oder alternativ weist die Konfigurationsinformation zum typspezifischen Speichern eine Information zum Speichern oder Nicht-Speichern von nicht verstehbaren und/oder nicht auswertbaren Betriebsdaten auf.

Insbesondere kann der Identifikator in dem typunspezifischen Datenformat eine typunspezifische Datenadresse aufweisen. Zusätzlich oder alternativ kann die Vorrichtung, insbesondere bei werksseitiger Auslieferung, zum Finden und/oder zum Erkennen des Identifikators ausgebildet sein.

In einer Weiterbildung der Erfindung weisen die Betriebsdaten eine Drehzahl eines Antriebsmotors des Werkzeugs, einen Motorstrom des Antriebsmotors, eine Temperatur des Werkzeugs, insbesondere des Antriebsmotors, eine Akkuspannung eines, insbesondere des, mit dem Werkzeug verbundenen Akkumulators mittels des Werkzeugs erfasst, eine Zustandsinformation des Werkzeugs und/oder eine Fehlerinformation des Werkzeugs auf.

In einer Weiterbildung der Erfindung ist das Werkzeug eine Säge, oder ein Hoch-Entaster, oder eine Heckenschere, oder ein Heckenschneider, oder ein Gehölzschneider, oder eine Astschere, oder ein Blasgerät, oder ein Laubbläser, oder ein Sauggerät, oder ein Laubsauger, oder ein Reinigungsgerät, oder ein Hochdruckreiniger, oder eine Kehrwalze, oder eine Kehrbürste, oder ein Rasenmäher, oder ein Freischneider, oder ein Vertikutierer. Anders formuliert: die Menge von verschiedenen Typen von Werkzeugen kann eine Säge, oder einen Hoch-Entaster, oder eine Heckenschere, oder einen Heckenschneider, oder einen Gehölzschneider, oder eine Astschere, oder ein Blasgerät, oder einen Laubbläser, oder ein Sauggerät, oder einen Laubsauger, oder ein Reinigungsgerät, oder einen Hochdruckreiniger, oder eine Kehrwalze, oder eine Kehrbürste, oder einen Rasenmäher, oder einen Freischneider, oder einen Vertikutierer aufweisen.

In einer Weiterbildung der Erfindung weist das Verfahren die Schritte auf: Speichern, insbesondere automatisches Speichern, des erfassten Identifikators oder einer, insbesondere der, mittels der Vorrichtung basierend auf dem erfassten Identifikator ermittelten bzw. ausgewählten Identifikatorinformation in der Vorrichtung. Wiederholtes Erfassen, insbesondere automatisches Erfassen, eines, insbesondere des, Identifikators von einem, insbesondere dem, motorangetriebenen Werkzeug aus der Menge von verschiedenen Typen von motorangetriebenen Werkzeugen mittels der Vorrichtung, wobei die Vorrichtung an, insbesondere in, dem Werkzeug angeordnet ist bzw. mit diesem mechanisch verbunden ist. Vergleichen, insbesondere automatisches Vergleichen, des wiederholt erfassten Identifikators oder einer mittels der Vorrichtung basierend auf dem wiederholt erfassten Identifikator ermittelten bzw. ausgewählten Identifikatorinformation und des gespeicherten Identifikators oder der gespeicherten Identifikatorinformation miteinander mittels der Vorrichtung. Ausgeben, insbesondere benutzerwahrnehmbares und/oder automatisches Ausgeben, und/oder Senden, insbesondere automatisches Senden, einer Vergleichsergebnisinformation basierend auf einem Ergebnis des Vergleichens mittels der Vorrichtung. Dies ermöglicht eine veränderte Anordnung von dem, insbesondere ursprünglichen, Werkzeug zu einem anderen bzw. neuen Werkzeug zu detektieren und/oder wahrzunehmen, insbesondere durch den Benutzer. Dies ermöglicht ein, insbesondere neues, Anpassen der Vorrichtung an das andere Werkzeug auszulösen und/oder freizugeben, insbesondere durch den Benutzer. Insbesondere kann das Ausgeben und/oder das Senden der Vergleichsergebnisinformation erfolgen, falls das Ergebnis des Vergleichens ist, dass der wiederholt erfasste Identifikator oder die basierend auf dem wiederholt erfassten Identifikator ermittelte Identifikatorinformation und der gespeicherte Identifikator oder die gespeicherte Identifikatorinformation sich nicht gleichen.

In einer Weiterbildung der Erfindung weist der Schritt b) auf: Übertragen des erfassten Identifikators oder einer, insbesondere der, mittels der Vorrichtung basierend auf dem erfassten Identifikator ermittelten Identifikatorinformation von der Vorrichtung zu einem, insbesondere mobilen, Endgerät und von dem Endgerät zu der Datenbank.

Zusätzlich oder alternativ weist der Schritt b) auf: Übertragen der typspezifischen Konfigurationsinformation von der Datenbank zu dem Endgerät und von dem Endgerät zu der Vorrichtung.

Dies ermöglicht, dass die Vorrichtung, insbesondere nur, zum Übertragen über eine kurze Distanz ausgebildet sein kann oder braucht, wie zum Bluetooth-Übertragen oder zum WLAN-Übertragen. Insbesondere kann das Endgerät als Gateway bezeichnet werden. Zusätzlich oder alternativ kann das mobile Endgerät ein Laptop, ein Tablet oder ein Smartphone sein. Zusätzlich oder alternativ kann mobil als portabel oder handgeführt, insbesondere handgetragen, bezeichnet werden. Weiter zusätzlich oder alternativ kann das Endgerät von der Vorrichtung, der Datenbank und/oder dem Werkzeug verschieden sein.

Das erfindungsgemäße, insbesondere automatische, Verfahren zum, insbesondere automatischen, typabhängigen Betreiben einer, insbesondere der, Vorrichtung, wobei die Vorrichtung an, insbesondere in, einem, insbesondere dem, motorangetriebenen Werkzeug aus einer, insbesondere der, Menge von verschiedenen Typen von motorangetriebenen Werkzeugen angeordnet ist bzw. mit diesem mechanisch verbunden ist, weist auf: Ein, insbesondere das, Verfahren wie zuvor beschrieben zum Anpassen der Vorrichtung an das Werkzeug. Des Weiteren weist das Verfahren zum typabhängigen Betreiben der Vorrichtung den Schritt auf: Erfassen, insbesondere automatisches Erfassen, der Betriebsdaten von dem Werkzeug, insbesondere mittels des Kabels, soweit vorhanden, und typspezifisches Verarbeiten, insbesondere automatisches Verarbeiten, der erfassten Betriebsdaten, insbesondere von Werten der Betriebsdaten, mittels der Vorrichtung.

Die Anordnung an, insbesondere in, dem Werkzeug kann das Erfassen der Betriebsdaten ermöglichen. Zusätzlich oder alternativ kann das typabhängige Betreiben und/oder das typspezifische Verarbeiten für die verschiedenen Typen von Werkzeugen verschieden sein. Weiter zusätzlich oder alternativ kann das Verfahren zum typabhängigen Betreiben der Vorrichtung den Schritt aufweisen: Erstellen einer, insbesondere der, Betriebsdatenstatistik und/oder Erkennen und/oder Speichern eines, insbesondere des, Fehlers des Werkzeugs und/oder, insbesondere benutzerwahrnehmbares, Ausgeben und/oder Senden einer, insbesondere der, Auswerteinformation ausgewertet aus den Betriebsdaten mittels der Vorrichtung.

Das erfindungsgemäße, insbesondere elektrische, System ist in Anspruch 13 definiert. Es weist eine, insbesondere die, Vorrichtung und ein, insbesondere das, Werkzeug auf. Die, insbesondere elektrische, Vorrichtung ist zum Anpassen an ein, insbesondere das, motorangetriebenes Werkzeug aus einer, insbesondere der, Menge von verschiedenen Typen von motorangetriebenen Werkzeugen ausgebildet bzw. konfiguriert. Die Vorrichtung ist zur Anordnung an, insbesondere in, dem Werkzeug ausgebildet bzw. konfiguriert. Des Weiteren ist die Vorrichtung zum Erfassen eines, insbesondere des, Identifikators von dem Werkzeug ausgebildet bzw. konfiguriert. Außerdem ist die Vorrichtung zum Übertragen einer, insbesondere der, typspezifischen Konfigurationsinformation von einer, insbesondere der, Datenbank, wobei die Datenbank von dem Werkzeug und der Vorrichtung verschieden ist, zu der Vorrichtung basierend auf dem erfassten Identifikator derart ausgebildet bzw. konfiguriert, dass die Vorrichtung zum typspezifischen Verarbeiten von, insbesondere den, Betriebsdaten von dem Werkzeug ausgebildet bzw. konfiguriert ist.

Die Vorrichtung ist zum Erfassen der Betriebsdaten von dem Werkzeug ausgebildet.

Zusätzlich kann das System eine, insbesondere die und/oder elektronische Datenbank aufweisen.

Weiter zusätzlich oder alternativ kann das System ein, insbesondere, das Endgerät aufweisen.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine schematische Ansicht eines erfindungsgemäßen Systems aufweisend eine Vorrichtung und ein motorangetriebenes Werkzeug und eines erfindungsgemäßen Verfahrens zum typabhängigen Betreiben der Vorrichtung aufweisend ein erfindungsgemäßes Verfahren zum Anpassen der Vorrichtung an das Werkzeug,
- Fig. 2: eine schematische Explosionsansicht der Vorrichtung der Fig. 1,
- Fig. 3: ein schematisches Blockschaltschild des Systems und des Verfahrens der Fig. 1,
- Fig. 4: eine Übersicht über einen Teil einer typspezifischen Konfigurationsinformation zum Anpassen der Vorrichtung an das Werkzeug der Fig. 1, und
- Fig. 5: eine weitere Übersicht über einen weiteren Teil der typspezifischen Konfigurationsinformation der Fig. 4.

### DETAILLIERTE BESCHREIBUNG DER AUSFÜHRUNGSBEISPIELE

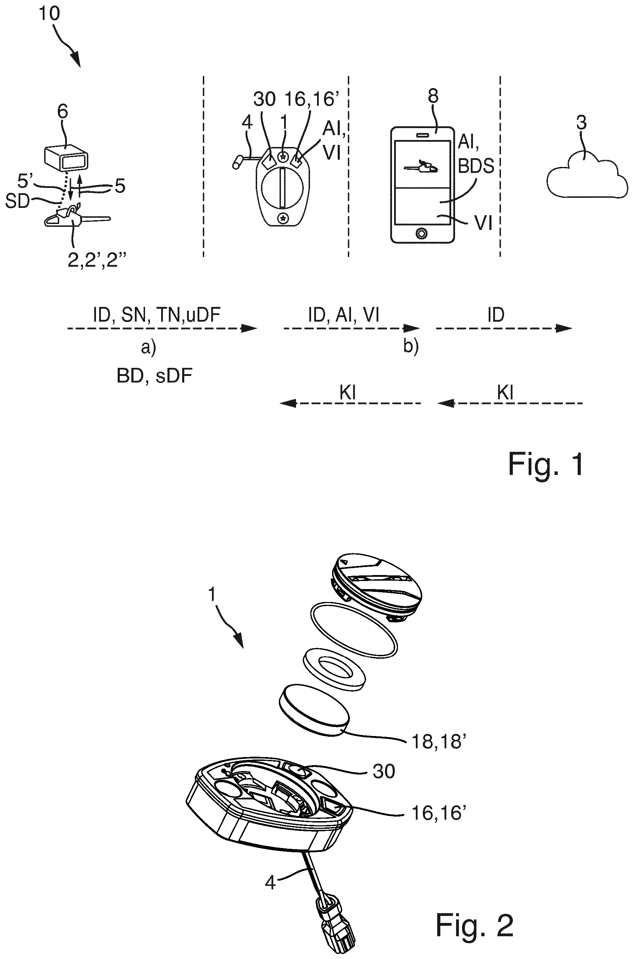

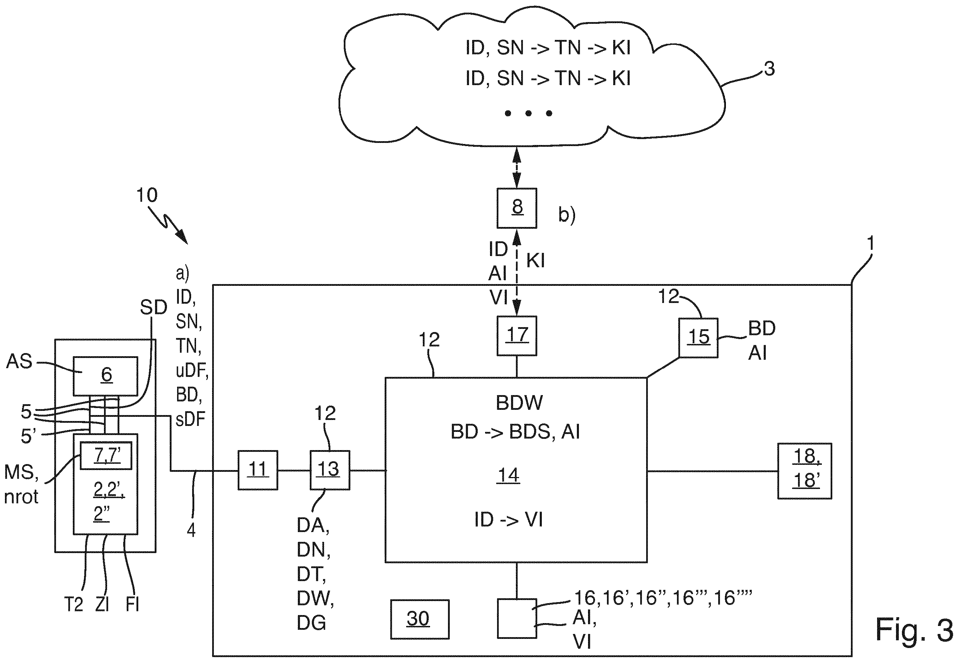

Fig. 1 bis 3 zeigen ein erfindungsgemäßes System 10. Das System weist eine Vorrichtung 1 auf. Zusätzlich weist das System 10 eine Datenbank 3 auf, im gezeigten Ausführungsbeispiel in einer Cloud. Weiter zusätzlich weist das System 10 ein motorangetriebenes Werkzeug 2 auf.

Im gezeigten Ausführungsbeispiel weist das System 10 ein, insbesondere mobiles, Endgerät 8 auf, insbesondere in Form eines Smartphones.

Die Vorrichtung 1 ist zum Anpassen an das motorangetriebene Werkzeug aus einer Menge von verschiedenen Typen von motorangetriebenen Werkzeugen 2 ausgebildet. Die Vorrichtung 1 ist zur Anordnung an dem Werkzeug 2 ausgebildet. Des Weiteren ist die Vorrichtung 1 zum Erfassen eines Identifikators ID von dem Werkzeug 2 ausgebildet. Außerdem ist die Vorrichtung 1 zum, insbesondere kabellosen, Übertragen einer typspezifischen Konfigurationsinformation KI von der Datenbank 3, wobei die Datenbank 3 von dem Werkzeug 2 und der Vorrichtung 1 verschieden ist, zu der Vorrichtung 1 basierend auf dem erfassten Identifikator ID derart ausgebildet, dass die Vorrichtung 1 zum typspezifischen Verarbeiten von Betriebsdaten BD von dem Werkzeug 2 ausgebildet ist.

Im gezeigten Ausführungsbeispiel ist die Vorrichtung 1 zum Erfassen der Betriebsdaten BD von dem Werkzeug 2 ausgebildet.

Das System 10 ist zum, insbesondere kabellosen, Übertragen der typspezifischen Konfigurationsinformation KI von der Datenbank 3, insbesondere zu der Vorrichtung 1, basierend auf dem erfassten Identifikator ID ausgebildet.

Weiter zeigen Fig. 1 bis 3 ein erfindungsgemäßes Verfahren zum typabhängigen Betreiben der Vorrichtung 1. Die Vorrichtung ist an dem motorangetriebenen Werkzeug 2 aus der Menge von verschiedenen Typen von motorangetriebenen Werkzeugen 2 angeordnet. Das Verfahren weist auf:
Ein erfindungsgemäßes Verfahren zum Anpassen der Vorrichtung 1 an das motorangetriebene Werkzeug 2 aus der Menge von verschiedenen Typen von motorangetriebenen Werkzeugen 2. Die Vorrichtung 1 ist an dem Werkzeug 2 angeordnet. Das Verfahren weist die Schritte auf: a) Erfassen des Identifikators ID von dem Werkzeug 2 mittels der Vorrichtung 1. b) Übertragen, insbesondere kabelloses Übertragen, der typspezifischen Konfigurationsinformation KI von der Datenbank 3, wobei die Datenbank 3 von dem Werkzeug 2 und der Vorrichtung 1 verschieden ist, zu der Vorrichtung 1 basierend auf dem erfassten Identifikator ID derart, dass die Vorrichtung 1 zum typspezifischen Verarbeiten der Betriebsdaten BD von dem Werkzeug 2 ausgebildet ist.

Zudem weist das Verfahren zum typabhängigen Betreiben der Vorrichtung 1 den Schritt auf: Erfassen der Betriebsdaten BD von dem Werkzeug 2 und typspezifisches Verarbeiten der erfassten Betriebsdaten BD mittels der Vorrichtung 1.

Im gezeigten Ausführungsbeispiel ist die Vorrichtung 1 getrennt von dem Werkzeug 2 ausgebildet.

Des Weiteren ist im gezeigten Ausführungsbeispiel die Vorrichtung 1 mit dem Werkzeug 2 mittels eines Kabels 4 zum Erfassen des Identifikators ID, insbesondere und der Betriebsdaten BD, verbunden. Der Schritt a) weist auf: Erfassen des Identifikators ID mittels des Kabels 4. In alternativen Ausführungsbeispielen kann das Erfassen des Identifikators und/oder der Betriebsdaten kabellos sein.

Im Detail ist das Werkzeug 2 ein Akkuwerkzeug 2`. Außerdem weist das Werkzeug 2 eine, insbesondere typunspezifische, Akkuschnittstelle 5 auf. Weiter ist das Werkzeug 2 mittels der Akkuschnittstelle 5 mit einem, insbesondere typunspezifischen, Akkumulator 6, insbesondere zur Antriebsstromversorgung, insbesondere eines Antriebsmotors 7 des Werkzeugs 2, verbunden. Zwischen dem Akkuwerkzeug 2' und dem Akkumulator 6 werden über die Akku-Schnittstelle 5, insbesondere eine Kommunikationsleitung 5' der Akku-Schnittstelle 5, der Identifikator ID, insbesondere und die Betriebsdaten BD, übertragen. Das Kabel 4 ist mit der Akku-Schnittstelle 5 oder einem Bus des Werkzeugs 2 für die Akku-Schnittstelle 5 verbunden.

Im gezeigten Ausführungsbeispiel ist der Antriebsmotor 7 ein Elektroantriebsmotor 7`. In alternativen Ausführungsbeispielen kann der Antriebsmotor des Werkzeugs ein Verbrennungsantriebsmotor sein.

Insbesondere weist die Vorrichtung 1 eine Erfassungseinrichtung 11 auf. Die Erfassungseinrichtung 11 ist zum Erfassen des Identifikators ID und/oder der Betriebsdaten BD von dem Werkzeug 2 ausgebildet.

Außerdem weist die Vorrichtung 1 eine Verarbeitungseinrichtung 12 auf. Die Verarbeitungseinrichtung 12 ist zum typspezifischen Verarbeiten der Betriebsdaten BD von dem Werkzeug 2 ausgebildet.

Weiter sind die Betriebsdaten BD von dem Werkzeug 2 in einem typspezifischen Datenformat sDF. Das typspezifische Verarbeiten weist ein Verstehen der, insbesondere erfassten, Betriebsdaten BD in dem typspezifischen Datenformat sDF auf, insbesondere mittels einer Versteheinrichtung 13 der Verarbeitungseinrichtung 12.

Zusätzlich weist das typspezifische Verarbeiten ein typspezifisches Auswerten der, insbesondere verstandenen, Betriebsdaten BD auf, insbesondere mittels einer Auswerteeinrichtung 14 der Verarbeitungseinrichtung 12.

Weiter zusätzlich weist das typspezifische Verarbeiten ein typspezifisches Speichern der, insbesondere ausgewerteten, Betriebsdaten BD auf, insbesondere mittels einer Speichereinrichtung 15 der Verarbeitungseinrichtung 12.

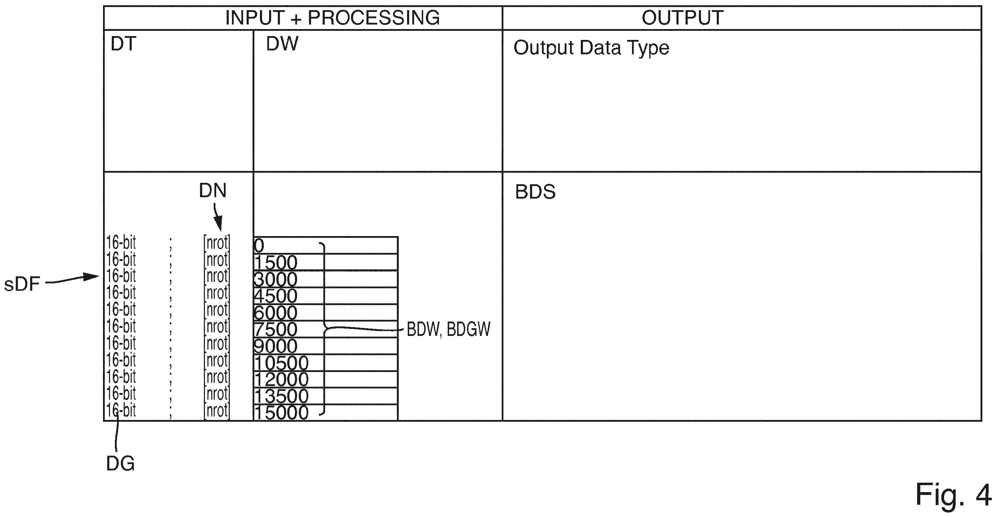

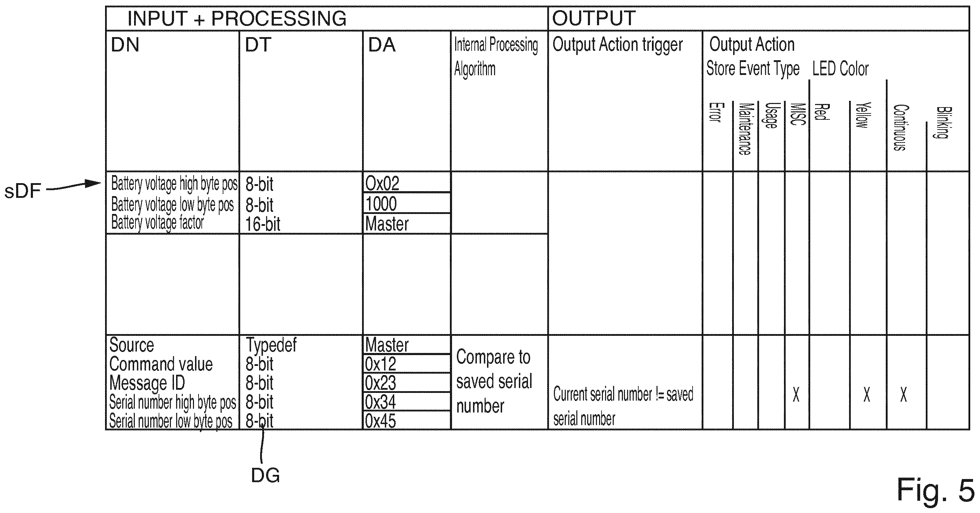

Im Detail weist die Konfigurationsinformation KI zum Verstehen eine Information zum Finden und/oder zum Erkennen der Betriebsdaten BD, insbesondere in Schnittstellendaten SD der Akku-Schnittstelle 5, von dem Werkzeug 2, insbesondere eine Information über eine Datenadresse DA, einen Datennamen DN, einen Datentyp DT, einen Datenwert DW und/oder eine Datengröße DG, auf, wie in Fig. 4 und 5 gezeigt.

Zusätzlich weist die Konfigurationsinformation KI zum typspezifischen Auswerten eine Information über mindestens einen typspezifischen Betriebsdatenwert BDW, insbesondere mindestens einen typspezifischen Betriebsdatengrenzwert BDGW, insbesondere zum Erstellen einer Betriebsdatenstatistik BDS und/oder zum Erkennen und/oder zum Speichern eines Fehlers des Werkzeugs 2, insbesondere in der Speichereinrichtung 15, und/oder zum Ausgeben und/oder zum Senden, insbesondere an das Endgerät 8, einer Auswerteinformation Al ausgewertet aus den Betriebsdaten BD, insbesondere mittels einer Ausgabeeinrichtung 16, insbesondere einer Anzeige 16`, und/oder einer Kommunikationsschnittstelle 17 der Vorrichtung 1, auf.

Weiter zusätzlich weist die Konfigurationsinformation zum typspezifischen Speichern eine Information zum Speichern oder Nicht-Speichern von nicht verstehbaren und/oder nicht auswertbaren Betriebsdaten BD auf.

Zudem weist das Verfahren zum typabhängigen Betreiben der Vorrichtung 1 den Schritt auf: Erstellen der Betriebsdatenstatistik BDS und/oder Erkennen und/oder Speichern des Fehlers des Werkzeugs 2 und/oder Ausgeben und/oder Senden der Auswerteinformation AI ausgewertet aus den Betriebsdaten BD mittels der Vorrichtung 1.

Des Weiteren weisen die Betriebsdaten BD eine Drehzahl nrot des Antriebsmotors 7 des Werkzeugs 2, einen Motorstrom MS des Antriebsmotors 7, eine Temperatur T2 des Werkzeugs 2, insbesondere des Antriebsmotors 7, eine Akkuspannung AS des mit dem Werkzeug 2 verbundenen Akkumulators 6 mittels des Werkzeugs 2 erfasst, eine Zustandsinformation ZI des Werkzeugs 2 und/oder eine Fehlerinformation FI des Werkzeugs 2 auf.

Im gezeigten Ausführungsbeispiel ist das Werkzeug 2 eine Säge 2". In alternativen Ausführungsbeispielen kann das Werkzeug ein Hoch-Entaster, oder eine Heckenschere, oder ein Heckenschneider, oder ein Gehölzschneider, oder eine Astschere, oder ein Blasgerät, oder ein Laubbläser, oder ein Sauggerät, oder ein Laubsauger, oder ein Reinigungsgerät, oder ein Hochdruckreiniger, oder eine Kehrwalze, oder eine Kehrbürste, oder ein Rasenmäher, oder ein Freischneider, oder ein Vertikutierer sein.

Im Detail sind für die Säge 2" und beispielsweise eine Heckenschere oder ein Blasgerät verschiedene der zuvor genannten Betriebsdaten BD verschieden relevant. Daher sind die, insbesondere für den jeweiligen Typ relevanten, Betriebsdaten BD in dem, insbesondere jeweiligen, typspezifischen Datenformat sDF, insbesondere und für den jeweiligen Typ irrelevanten Betriebsdaten nicht. Beispielsweise ist die Säge 2" drehmomentgesteuert und somit ist der Motorstrom MS relevant. Das Blasgerät ist drehzahlgesteuert und somit ist die Drehzahl relevant.

Außerdem ist zwar die Drehzahl nrot in den Betriebsdaten BD von der Säge 2" und der Heckenschere oder des Blasgeräts. Jedoch ist der typspezifische Betriebsdatenwert BDW für die Säge 2" und die Heckenschere oder das Blasgerät verschieden. Beispielsweise sind bei der Säge 2" geringe Zahlenwerte der Drehzahl nrot zu erwarten, aber bei der Heckenschere hohe Zahlenwerte und bei dem Blasgerät kann durch die Wahl des typspezifischen Betriebsdatenwerts, insbesondere des typspezifischen Betriebsdatengrenzwerts, berücksichtigt werden, dass es auch im Leerlauf eine Leistung haben kann. Somit ist die Betriebsdatenstatistik BDS, beispielsweise in Form eines Drehzahl-Histogramms, als Auswerteinformation Al typspezifisch.

Weiter kann der typspezifische Betriebsdatenwert BDW definieren, welches Event bzw. Ereignis zum Ausgeben und/oder Senden der Auswerteinformation AI führt. Insbesondere kann die Auswerteinformation AI eine Information über eine Art des Events aufweisen. Beispielsweise kann die Anzeige 16' aufweisend eine grüne LED 16", eine gelbe LED 16‴ und eine rote LED 16"" die Information über die Art des Events durch die Farben grün, gelb oder rot ausgeben. Zusätzlich oder alternativ kann die Anzeige 16' die Auswerteinformation Al aufweisend die Information über die Art des Events durch dauerhaftes Leuchten oder Blinken ausgeben.

Insbesondere ist der Identifikator ID in einem typunspezifischen Datenformat uDF, insbesondere weist eine typunspezifische Datenadresse auf.

Zudem weist der Identifikator eine Typnummer TN und/oder eine Seriennummer SN auf. Im gezeigten Ausführungsbeispiel ist der Identifikator ID die Seriennummer SN. Die Seriennummer SN weist die Typnummer TN auf.

Des Weiteren weist das Verfahren zum Anpassen der Vorrichtung 1 an das Werkzeug 2 die Schritte auf: Speichern des erfassten Identifikators ID oder einer mittels der Vorrichtung 1 basierend auf dem erfassten Identifikator ID ermittelten Identifikatorinformation in der Vorrichtung 1, insbesondere in der Speichereinrichtung 15. Wiederholtes Erfassen eines, insbesondere des, Identifikators ID von einem, insbesondere dem, motorangetriebenen Werkzeug 2 aus der Menge von verschiedenen Typen von motorangetriebenen Werkzeugen 2 mittels der Vorrichtung 1, wobei die Vorrichtung 1 an dem Werkzeug 2 angeordnet ist. Vergleichen des wiederholt erfassten Identifikators ID oder einer mittels der Vorrichtung 1 basierend auf dem wiederholt erfassten Identifikator ID ermittelten Identifikatorinformation und des gespeicherten Identifikators ID oder der gespeicherten Identifikatorinformation miteinander mittels der Vorrichtung 1, insbesondere der Auswerteeinrichtung 14. Ausgeben und/oder Senden, insbesondere an das Endgerät 8, einer Vergleichsergebnisinformation VI basierend auf einem Ergebnis des Vergleichens mittels der Vorrichtung 1, insbesondere der Ausgabeeinrichtung 14 und/oder der Kommunikationsschnittstelle 17, wie in Fig. 5 gezeigt.

Insbesondere kann das Ausgeben und/oder das Senden der Vergleichsergebnisinformation VI erfolgen, insbesondere mittels dauerhaften Leuchtens der gelben LED 16‴, falls das Ergebnis des Vergleichens ist, dass der wiederholt erfasste Identifikator oder die basierend auf dem wiederholt erfassten Identifikator ermittelte Identifikatorinformation und der gespeicherte Identifikator oder die gespeicherte Identifikatorinformation sich nicht gleichen.

Im gezeigten Ausführungsbeispiel weist die Vorrichtung 1 ein benutzerbetätigbares Bedienelement 30 auf. Das Ausgeben, insbesondere der Auswerteinformation AI und/oder der Vergleichsergebnisinformation VI, erfolgt unter der Bedingung, dass das Bedienelement 30 betätigt worden ist.

Außerdem weist der Schritt b) auf: Übertragen des erfassten Identifikators ID oder einer, insbesondere der, mittels der Vorrichtung 1 basierend auf dem erfassten Identifikator ID ermittelten Identifikatorinformation von der Vorrichtung 1 zu dem Endgerät 8 und von dem Endgerät 8 zu der Datenbank 3.

Zusätzlich weist der Schritt b) auf: Übertragen der typspezifischen Konfigurationsinformation KI von der Datenbank 3 zu dem Endgerät 8 und von dem Endgerät 8 zu der Vorrichtung 1.

Insbesondere weist der Schritt b) auf: Übertragen des erfassten Identifikators ID oder einer, insbesondere der, mittels der Vorrichtung 1 basierend auf dem erfassten Identifikator ID ermittelten Identifikatorinformation von der Vorrichtung 1 zu der Datenbank 3, insbesondere mittels der Kommunikationsschnittstelle 17 und/oder des Endgeräts 8. Zusätzlich weist der Schritt b) auf: Ermitteln der typspezifischen Konfigurationsinformation Kl, insbesondere aus einer Menge von verschiedenen typspezifischen Konfigurationsinformationen Kl, basierend auf dem übertragenen Identifikator ID oder der übertragenen Identifikatorinformation mittels der Datenbank 3. Weiter zusätzlich weist der Schritt b) auf: Übertragen der ermittelten typspezifischen Konfigurationsinformation KI von der Datenbank zu der Vorrichtung 1, insbesondere mittels des Endgeräts 8 und/oder der Kommunikationsschnittstelle 17. Weiter zusätzlich weist der Schritt b) auf: Implementieren der typspezifischen Konfigurationsinformation KI mittels der Vorrichtung 1.

Weiter sind die Erfassungseinrichtung 11, die Verarbeitungseinrichtung 12, insbesondere die Versteheinrichtung 13, die Auswerteeinrichtung 14, die Speichereinrichtung 15, die Ausgabeeinrichtung 16, die Kommunikationsschnittstelle 17 und/oder das Bedienelement 30 miteinander elektrisch verbunden.

Zudem weist die Vorrichtung 1 einen elektrischen Energiespeicher 18, insbesondere in Form einer Batterie 18', auf. Der elektrische Energiespeicher 18 ist zur Versorgung der Erfassungseinrichtung 11, der Verarbeitungseinrichtung 12, insbesondere der Versteheinrichtung 13, der Auswerteeinrichtung 14, der Speichereinrichtung 15, der Ausgabeeinrichtung 16 und/oder der Kommunikationsschnittstelle 17 mit elektrischer Leistung ausgebildet, insbesondere versorgt.

Im gezeigten Ausführungsbeispiel kann zusätzlich die Vorrichtung 1 zur Versorgung mit elektrischer Leistung von dem Akkumulator 6 mittels des Kabels 4 ausgebildet sein, insbesondere versorgt sein.

Des Weiteren kann das Endgerät 8 zur, insbesondere benutzerwahrnehmbaren, Ausgabe der empfangenen Auswerteinformation Al und/oder der empfangenen Vergleichsergebnisinformation VI ausgebildet sein, insbesondere ausgeben. Zusätzlich oder alternativ kann das Endgerät 8 eine beliebige datenverarbeitende Einrichtung sein, die eine kabellose Kommunikationsschnittstelle aufweisen kann, die zur kabellosen Übertragung bzw. Kommunikation mit der Kommunikationsschnittstelle 17 der Vorrichtung 1 ausgebildet sein kann.

Wie die gezeigten und oben erläuterten Ausführungsbeispiele deutlich machen, stellt die Erfindung ein Verfahren zum Anpassen einer Vorrichtung an ein motorangetriebenes Werkzeug aus einer Menge von verschiedenen Typen von motorangetriebenen Werkzeugen bereit, insbesondere wobei das Verfahren verbesserte Eigenschaften aufweist. Des Weiteren stellt die Erfindung ein Verfahren zum typabhängigen Betreiben einer Vorrichtung, wobei die Vorrichtung an einem motorangetriebenen Werkzeug aus einer Menge von verschiedenen Typen von motorangetriebenen Werkzeugen angeordnet ist, wobei das Verfahren ein solches Verfahren zum Anpassen der Vorrichtung an das Werkzeug aufweist, und ein System aufweisend eine Vorrichtung zum Anpassen an ein motorangetriebenes Werkzeug aus einer Menge von verschiedenen Typen von motorangetriebenen Werkzeugen bereit.

## Patentansprüche

1. Verfahren zum Anpassen einer Vorrichtung (1) an ein motorangetriebenes Werkzeug (2) aus einer Menge von verschiedenen Typen von motorangetriebenen Werkzeugen (2), wobei die Vorrichtung (1) an dem Werkzeug (2) angeordnet ist, wobei das Verfahren die Schritte aufweist:
a) Erfassen eines Identifikators (ID) von dem Werkzeug (2) mittels der Vorrichtung (1), **gekennzeichnet durch**
b) Übertragen einer typspezifischen Konfigurationsinformation (KI) von einer Datenbank (3), wobei die Datenbank (3) von dem Werkzeug (2) und der Vorrichtung (1) verschieden ist, zu der Vorrichtung (1) basierend auf dem erfassten Identifikator (ID) derart, dass die Vorrichtung (1) zum typspezifischen Verarbeiten von Betriebsdaten (BD) von dem Werkzeug (2) ausgebildet ist.

2. Verfahren nach Anspruch 1,
- wobei die Vorrichtung (1) getrennt von dem Werkzeug (2) ausgebildet ist.

3. Verfahren nach einem der vorhergehenden Ansprüche,
- wobei der Identifikator (ID) eine Typnummer (TN) und/oder eine Seriennummer (SN) aufweist, insbesondere eine Typnummer (TN) oder eine Seriennummer (SN) ist.

4. Verfahren nach einem der vorhergehenden Ansprüche,
- wobei die Vorrichtung (1) mit dem Werkzeug (2) mittels eines Kabels (4) zum Erfassen des Identifikators (ID), insbesondere und der Betriebsdaten (BD), verbunden ist, und
- wobei der Schritt a) aufweist: Erfassen des Identifikators (ID) mittels des Kabels (4).

5. Verfahren nach Anspruch 4,
- wobei das Werkzeug (2) ein Akkuwerkzeug (2') ist, eine Akkuschnittstelle (5) aufweist und mittels der Akkuschnittstelle (5) mit einem Akkumulator (6) verbunden ist, wobei zwischen dem Akkuwerkzeug (2') und dem Akkumulator (6) über die Akku-Schnittstelle (5), insbesondere eine Kommunikationsleitung (5') der Akku-Schnittstelle (5), der Identifikator (ID), insbesondere und die Betriebsdaten (BD), übertragen werden, und
- wobei das Kabel (4) mit der Akku-Schnittstelle (5) oder einem Bus des Werkzeugs (2) für die Akku-Schnittstelle (5) verbunden ist.

6. Verfahren nach einem der vorhergehenden Ansprüche,
- wobei die Betriebsdaten (BD) von dem Werkzeug (2) in einem typspezifischen Datenformat (sDF) sind, und wobei das typspezifische Verarbeiten ein Verstehen der Betriebsdaten (BD) in dem typspezifischen Datenformat (sDF) aufweist, und/oder
- wobei das typspezifische Verarbeiten ein typspezifisches Auswerten der Betriebsdaten (BD) aufweist, und/oder
- wobei das typspezifische Verarbeiten ein typspezifisches Speichern der Betriebsdaten (BD) aufweist.

7. Verfahren nach Anspruch 6,
- wobei die Konfigurationsinformation (KI) zum Verstehen eine Information zum Finden und/oder zum Erkennen der Betriebsdaten (BD) von dem Werkzeug (2), insbesondere eine Information über eine Datenadresse (DA), einen Datennamen (DN), einen Datentyp (DT), einen Datenwert (DW) und/oder eine Datengröße (DG), aufweist, und/oder
- wobei die Konfigurationsinformation (KI) zum typspezifischen Auswerten eine Information über mindestens einen typspezifischen Betriebsdatenwert (BDVη, insbesondere zum Erstellen einer Betriebsdatenstatistik (BDS) und/oder zum Erkennen und/oder zum Speichern eines Fehlers des Werkzeugs (2) und/oder zum Ausgeben und/oder zum Senden einer Auswerteinformation (AI) ausgewertet aus den Betriebsdaten (BD), aufweist, und/oder
- wobei die Konfigurationsinformation (KI) zum typspezifischen Speichern eine Information zum Speichern oder Nicht-Speichern von nicht verstehbaren und/oder nicht auswertbaren Betriebsdaten (BD) aufweist.

8. Verfahren nach einem der vorhergehenden Ansprüche,
- wobei die Betriebsdaten (BD) eine Drehzahl (nrot) eines Antriebsmotors (7) des Werkzeugs (2), einen Motorstrom (MS) des Antriebsmotors (7), eine Temperatur (T2) des Werkzeugs (2), eine Akkuspannung (AS) eines mit dem Werkzeug (2) verbundenen Akkumulators (6) mittels des Werkzeugs (2) erfasst, eine Zustandsinformation (ZI) des Werkzeugs (2) und/oder eine Fehlerinformation (FI) des Werkzeugs (2) aufweisen.

9. Verfahren nach einem der vorhergehenden Ansprüche,
- wobei das Werkzeug (2) eine Säge (2"), oder ein Hoch-Entaster, oder eine Heckenschere, oder ein Heckenschneider, oder ein Gehölzschneider, oder eine Astschere, oder ein Blasgerät, oder ein Laubbläser, oder ein Sauggerät, oder ein Laubsauger, oder ein Reinigungsgerät, oder ein Hochdruckreiniger, oder eine Kehrwalze, oder eine Kehrbürste, oder ein Rasenmäher, oder ein Freischneider, oder ein Vertikutierer ist.

10. Verfahren nach einem der vorhergehenden Ansprüche, wobei das Verfahren die Schritte aufweist:
- Speichern des erfassten Identifikators (ID) oder einer mittels der Vorrichtung (1) basierend auf dem erfassten Identifikator (ID) ermittelten Identifikatorinformation in der Vorrichtung (1),
- wiederholtes Erfassen eines Identifikators (ID) von einem motorangetriebenen Werkzeug (2) aus der Menge von verschiedenen Typen von motorangetriebenen Werkzeugen (2) mittels der Vorrichtung (1), wobei die Vorrichtung (1) an dem Werkzeug (2) angeordnet ist,
- Vergleichen des wiederholt erfassten Identifikators (ID) oder einer mittels der Vorrichtung (1) basierend auf dem wiederholt erfassten Identifikator (ID) ermittelten Identifikatorinformation und des gespeicherten Identifikators (ID) oder der gespeicherten Identifikatorinformation miteinander mittels der Vorrichtung (1), und
- Ausgeben und/oder Senden einer Vergleichsergebnisinformation (VI) basierend auf einem Ergebnis des Vergleichens mittels der Vorrichtung (1).

11. Verfahren nach einem der vorhergehenden Ansprüche,
- wobei der Schritt b) aufweist:
- Übertragen des erfassten Identifikators (ID) oder einer mittels der Vorrichtung (1) basierend auf dem erfassten Identifikator (ID) ermittelten Identifikatorinformation von der Vorrichtung (1) zu einem, insbesondere mobilen, Endgerät (8) und von dem Endgerät (8) zu der Datenbank (3), und/oder
- Übertragen der typspezifischen Konfigurationsinformation (KI) von der Datenbank (3) zu dem Endgerät (8) und von dem Endgerät (8) zu der Vorrichtung (1).

12. Verfahren zum typabhängigen Betreiben einer Vorrichtung (1), wobei die Vorrichtung (1) an einem motorangetriebenen Werkzeug (2) aus einer Menge von verschiedenen Typen von motorangetriebenen Werkzeugen (2) angeordnet ist,
- wobei das Verfahren ein Verfahren nach einem der vorhergehenden Ansprüche zum Anpassen der Vorrichtung (1) an das Werkzeug (2) aufweist, und
- wobei das Verfahren zum typabhängigen Betreiben der Vorrichtung (1) den Schritt aufweist: Erfassen der Betriebsdaten (BD) von dem Werkzeug (2) und typspezifisches Verarbeiten der erfassten Betriebsdaten (BD) mittels der Vorrichtung (1).

13. System (10), wobei das System (10) aufweist:
- eine Vorrichtung (1) zum Anpassen an ein motorangetriebenes Werkzeug (2) aus einer Menge von verschiedenen Typen von motorangetriebenen Werkzeugen (2), und
- das Werkzeug (2),
- wobei die Vorrichtung (1) zur Anordnung an dem Werkzeug (2) ausgebildet ist,
- wobei die Vorrichtung (1) zum Erfassen eines Identifikators (ID) von dem Werkzeug (2) ausgebildet ist,
**gekennzeichnet dadurch,**
- **dass** die Vorrichtung (1) zum Übertragen einer typspezifischen Konfigurationsinformation (KI) von einer Datenbank (3), wobei die Datenbank (3) von dem Werkzeug (2) und der Vorrichtung (1) verschieden ist, zu der Vorrichtung (1) basierend auf dem erfassten Identifikator (ID) derart ausgebildet ist, dass die Vorrichtung (1) zum typspezifischen Verarbeiten von Betriebsdaten (BD) von dem Werkzeug (2) ausgebildet ist.

14. System (10) nach Anspruch 13, wobei das System (10) aufweist:
- die Datenbank (3).

## Claims

1. Method for adapting an apparatus (1) to a motor-driven tool (2) from a set of different types of motor-driven tools (2), wherein the apparatus (1) is arranged on the tool (2), wherein the method has the steps of:
a) capturing an identifier (ID) of the tool (2) by means of the apparatus (1),
**characterized by**
b) transmitting an item of type-specific configuration information (KI) from a database (3), wherein the database (3) differs from the tool (2) and the apparatus (1), to the apparatus (1) on the basis of the captured identifier (ID) in such a manner that the apparatus (1) is designed to process operating data (BD) of the tool (2) in a type-specific manner.

2. Method according to Claim 1,
- wherein the apparatus (1) is designed to be separate from the tool (2).

3. Method according to either of the preceding claims,
- wherein the identifier (ID) has a type number (TN) and/or a serial number (SN), in particular is a type number (TN) or a serial number (SN).

4. Method according to one of the preceding claims,
- wherein the apparatus (1) is connected to the tool (2) by means of a cable (4) for capturing the identifier (ID), in particular including the operating data (BD), and
- wherein step a) comprises: capturing the identifier (ID) by means of the cable (4).

5. Method according to Claim 4,
- wherein the tool (2) is a rechargeable battery tool (2'), has a rechargeable battery interface (5) and is connected to a rechargeable battery (6) by means of the rechargeable battery interface (5), wherein the identifier (ID), in particular including the operating data (BD), is transmitted between the rechargeable battery tool (2') and the rechargeable battery (6) via the rechargeable battery interface (5), in particular a communication line (5') of the rechargeable battery interface (5), and
- wherein the cable (4) is connected to the rechargeable battery interface (5) or to a bus of the tool (2) for the rechargeable battery interface (5).

6. Method according to one of the preceding claims,
- wherein the operating data (BD) of the tool (2) are in a type-specific data format (sDF), and wherein the type-specific processing comprises understanding the operating data (BD) in the type-specific data format (sDF), and/or
- wherein the type-specific processing comprises type-specific evaluation of the operating data (BD), and/or
- wherein the type-specific processing comprises type-specific storage of the operating data (BD).

7. Method according to Claim 6,
- wherein the configuration information (KI) for understanding has an item of information for finding and/or detecting the operating data (BD) of the tool (2), in particular an item of information relating to a data address (DA), a data name (DN), a data type (DT), a data value (DW) and/or a data size (DG), and/or
- wherein the configuration information (KI) for type-specific evaluation has an item of information relating to at least one type-specific operating data value (BDW), in particular for creating operating data statistics (BDS) and/or for detecting and/or storing a fault of the tool (2) and/or for outputting and/or transmitting an item of evaluation information (AI) evaluated from the operating data (BD), and/or
- wherein the configuration information (KI) for type-specific storage has an item of information for storing or not storing operating data (BD) which cannot be understood and/or evaluated.

8. Method according to one of the preceding claims,
- wherein the operating data (BD) have a speed (nrot) of a drive motor (7) of the tool (2), a motor current (MS) of the drive motor (7), a temperature (T2) of the tool (2), a rechargeable battery voltage (AS) of a rechargeable battery (6) connected to the tool (2) captured by means of the tool (2), an item of status information (ZI) relating to the tool (2) and/or an item of fault information (FI) relating to the tool (2).

9. Method according to one of the preceding claims,
- wherein the tool (2) is a saw (2'') or a pole pruner or hedge shears or a hedge cutter or a woodcutter or branch shears or a blower or a leaf blower or an aspirator or a leaf aspirator or a cleaning device or a high-pressure cleaner or a sweeper roller or a sweeper brush or a lawnmower or a brush cutter or a scarifier.

10. Method according to one of the preceding claims, wherein the method has the steps of:
- storing the captured identifier (ID), or an item of identifier information determined by means of the apparatus (1) on the basis of the captured identifier (ID), in the apparatus (1),
- repeatedly capturing an identifier (ID) from a motor-driven tool (2) from the set of different types of motor-driven tools (2) by means of the apparatus (1), wherein the apparatus (1) is arranged on the tool (2),
- comparing the repeatedly captured identifier (ID) or an item of identifier information determined by means of the apparatus (1) on the basis of the repeatedly captured identifier (ID) and the stored identifier (ID) or the stored identifier information with one another by means of the apparatus (1), and
- outputting and/or transmitting an item of comparison result information (VI) on the basis of a result of the comparison by means of the apparatus (1).

11. Method according to one of the preceding claims,
- wherein step b) comprises:
- transmitting the captured identifier (ID), or an item of identifier information determined by means of the apparatus (1) on the basis of the captured identifier (ID), from the apparatus (1) to a terminal (8), in particular a mobile terminal, and from the terminal (8) to the database (3), and/or
- transmitting the type-specific configuration information (KI) from the database (3) to the terminal (8) and from the terminal (8) to the apparatus (1).

12. Method for operating an apparatus (1) in a type-dependent manner, wherein the apparatus (1) is arranged on a motor-driven tool (2) from a set of different types of motor-driven tools (2),
- wherein the method comprises a method according to one of the preceding claims for adapting the apparatus (1) to the tool (2), and
- wherein the method for operating the apparatus (1) in a type-dependent manner has the step of: capturing the operating data (BD) of the tool (2) and processing the captured operating data (BD) in a type-specific manner by means of the apparatus (1) .

13. System (10), wherein the system (10) has:
- an apparatus (1) for adaptation to a motor-driven tool (2) from a set of different types of motor-driven tools (2), and
- the tool (2),
- wherein the apparatus (1) is designed for arrangement on the tool (2),
- wherein the apparatus (1) is designed to capture an identifier (ID) of the tool (2),
**characterized in**
- **that** the apparatus (1) is designed to transmit an item of type-specific configuration information (KI) from a database (3), wherein the database (3) differs from the tool (2) and the apparatus (1), to the apparatus (1) on the basis of the captured identifier (ID) in such a manner that the apparatus (1) is designed to process operating data (BD) of the tool (2) in a type-specific manner.

14. System (10) according to Claim 13, wherein the system (10) has:
- the database (3).

## Revendications

1. Procédé permettant d'adapter un dispositif (1) à un outil motorisé (2) parmi une quantité de différents types d'outils motorisés (2), le dispositif (1) étant disposé sur l'outil (2), le procédé présentant l'étape consistant à :
a) détecter un identifiant (ID) de l'outil (2) au moyen du dispositif (1),
**caractérisé par** l'étape consistant à
b) transmettre une information de configuration (KI) spécifique au type d'une base de données (3), les bases de données (3) de l'outil (2) et du dispositif (1) étant différentes, au dispositif (1) sur la base de l'identifiant (ID) détecté, de telle sorte que le dispositif (1) est réalisé pour le traitement spécifique au type des données de fonctionnement (BD) de l'outil (2) .

2. Procédé selon la revendication 1,
- dans lequel le dispositif (1) est réalisé séparément de l'outil (2).

3. Procédé selon l'une quelconque des revendications précédentes,
- dans lequel l'identifiant (ID) présente un numéro de type (TN) et/ou un numéro de série (SN), en particulier un numéro de type (TN) ou un numéro de série (SN).

4. Procédé selon l'une quelconque des revendications précédentes,
- dans lequel le dispositif (1) est relié à l'outil (2) au moyen d'un câble (4) pour détecter en particulier l'identifiant (ID) ainsi que les données de fonctionnement (BD), et
- dans lequel l'étape a) présente : la détection de l'identifiant (ID) au moyen du câble (4).

5. Procédé selon la revendication 4,
- dans lequel l'outil (2) est un outil sans fil (2'), présente une interface d'accumulateur (5) et est relié à un accumulateur (6) au moyen de l'interface d'accumulateur (5), dans lequel en particulier l'identifiant (ID) ainsi que les données de fonctionnement (BD) sont transmis entre l'outil sans fil (2') et l'accumulateur (6) par l'intermédiaire de l'interface d'accumulateur (5), en particulier d'une ligne de communication (5') de l'interface d'accumulateur (5), et
- dans lequel le câble (4) est relié à l'interface d'accumulateur (5) ou à un bus de l'outil (2) pour l'interface d'accumulateur (5).

6. Procédé selon l'une quelconque des revendications précédentes,
- dans lequel les données de fonctionnement (BD) de l'outil (2) présentent un format de données spécifique au type (sDF), et dans lequel le traitement spécifique au type présente une compréhension des données de fonctionnement (BD) dans le format de données spécifique au type (sDF), et/ou
- dans lequel le traitement spécifique au type présente une évaluation spécifique au type des données de fonctionnement (BD), et/ou
- dans lequel le traitement spécifique au type présente un stockage spécifique au type des données de fonctionnement (BD).

7. Procédé selon la revendication 6,
- dans lequel l'information de configuration (KI) pour la compréhension présente une information pour trouver et/ou identifier les données de fonctionnement (BD) de l'outil (2), en particulier une information concernant une adresse de données (DA), un nom de données (DN), un type de données (DT), une valeur de données (DW) et/ou une taille de données (DG), et/ou
- dans lequel l'information de configuration (KI) pour l'évaluation spécifique au type présente une information concernant au moins une valeur de données de fonctionnement spécifique au type (BDW), en particulier pour créer une statistique de données de fonctionnement (BDS) et/ou pour identifier et/ou pour stocker un défaut de l'outil (2) et/ou pour sortir et/ou pour envoyer une information d'évaluation (AI) qui est évaluée à partir des données de fonctionnement (BD), et/ou
- dans lequel l'information de configuration (KI) pour le stockage spécifique au type présente une information pour stocker ou ne pas stocker des données de fonctionnement (BD) incompréhensibles et/ou impossibles à évaluer.

8. Procédé selon l'une quelconque des revendications précédentes,
- dans lequel les données de fonctionnement (BD) présentent une vitesse de rotation (nrot) d'un moteur d'entraînement (7) de l'outil (2), un courant moteur (MS) du moteur d'entraînement (7), une température (T2) de l'outil (2), une tension d'accumulateur (AS) d'un accumulateur (6) relié à l'outil (2), détectée au moyen de l'outil (2), une information d'état (ZI) de l'outil (2) et/ou une information de défaut (FI) de l'outil (2).

9. Procédé selon l'une quelconque des revendications précédentes,
- dans lequel l'outil (2) est une scie (2"), ou une élagueuse, ou une cisaille à haies, ou un taille-haie, ou une tronçonneuse à bois, ou un sécateur, ou un souffleur, ou un souffleur à feuilles, ou un aspirateur, ou un aspirateur à feuilles, ou un appareil de nettoyage, ou un nettoyeur haute pression, ou un rouleau de balayage, ou une brosse de balayage, ou une tondeuse à gazon ou une débroussailleuse ou un scarificateur.

10. Procédé selon l'une quelconque des revendications précédentes, le procédé présentant les étapes consistant à :
- stocker dans le dispositif (1) l'identifiant (ID) détecté ou une information d'identifiant établie au moyen du dispositif (1) sur la base de l'identifiant (ID) détecté,
- détecter à plusieurs reprises un identifiant (ID) d'un outil motorisé (2) parmi la quantité de différents types d'outils motorisés (2) au moyen du dispositif (1), le dispositif (1) étant disposé sur l'outil (2),
- comparer l'identifiant (ID) détecté à plusieurs reprises ou une information d'identifiant établie au moyen du dispositif (1) sur la base de l'identifiant (ID) détecté à plusieurs reprises et l'identifiant (ID) stocké ou l'information d'identifiant stockée l'un avec l'autre au moyen du dispositif (1), et
- sortir et/ou envoyer une information de résultat de comparaison (VI) sur la base d'un résultat de la comparaison au moyen du dispositif (1).

11. Procédé selon l'une quelconque des revendications précédentes,
- l'étape b) présentant les étapes consistant à :
- transmettre l'identifiant (ID) détecté ou une information d'identifiant établie au moyen du dispositif (1) sur la base de l'identifiant (ID) détecté du dispositif (1) à un terminal (8), en particulier mobile, et du terminal (8) à la base de données (3), et/ou
- transmettre l'information de configuration spécifique au type (KI) de la base de données (3) au terminal (8) et du terminal (8) au dispositif (1).

12. Procédé permettant de faire fonctionner un dispositif (1) en fonction du type, dans lequel le dispositif (1) est disposé sur un outil motorisé (2) parmi une quantité de différents types d'outils motorisés (2),
- dans lequel le procédé présente un procédé selon l'une quelconque des revendications précédentes pour adapter le dispositif (1) à l'outil (2), et
- dans lequel le procédé permettant de faire fonctionner un dispositif (1) en fonction du type présente l'étape consistant à : détecter les données de fonctionnement (BD) de l'outil (2) et traiter de manière spécifique au type les données de fonctionnement (BD) détectées au moyen du dispositif (1).

13. Système (10), le système (10) présentant :
- un dispositif (1) pour s'adapter à un outil motorisé (2) parmi une quantité de différents types d'outils motorisés (2), et
- l'outil (2),
- dans lequel le dispositif (1) est réalisé pour être disposé sur l'outil (2),
- dans lequel le dispositif (1) est réalisé pour détecter un identifiant (ID) de l'outil (2),
**caractérisé en ce que**
- le dispositif (1) est réalisé pour transmettre une information de configuration (KI) spécifique au type d'une base de données (3), les bases de données (3) de l'outil (2) et du dispositif (1) étant différentes, au dispositif (1) sur la base de l'identifiant (ID) détecté, de telle sorte que le dispositif (1) est réalisé pour le traitement spécifique au type des données de fonctionnement (BD) de l'outil (2).

14. Système (10) selon la revendication 13, le système (10) présentant :
- la base de données (3).
